Europäisches Patentamt

(19) European Patent Office

Office européen des brevets

(11) Numéro de publication : **0 128 096**
**B1**

(12) **FASCICULE DE BREVET EUROPÉEN**

(45) Date de publication du fascicule du brevet :
29.07.87

(21) Numéro de dépôt : **84401124.7**

(22) Date de dépôt : **01.06.84**

(51) Int. Cl.⁴ : **F 16 K 31/163**

(54) Actionneur à accumulateur d'énergie pneumatique notamment pour robinet.

(30) Priorité : **06.06.83 FR 8309345**

(43) Date de publication de la demande :
**12.12.84 Bulletin 84/50**

(45) Mention de la délivrance du brevet :
**29.07.87 Bulletin 87/31**

(84) Etats contractants désignés :
**BE DE GB IT NL SE**

(56) Documents cités :
**CH-A- 480 544**
**FR-A- 1 312 482**
**FR-A- 1 460 561**
**FR-A- 2 214 853**
**FR-A- 2 304 957**
**FR-A- 2 343 185**
**US-A- 3 232 181**
**US-A- 4 087 074**

(73) Titulaire : **APPLICATIONS MECANIQUES ET ROBI-
NETTERIE INDUSTRIELLE A.M.R.I. Société anonyme
dite:
Les Mercuriales 40, rue Jean Jaurès
F-93176 Bagnolet Cedex (FR)**

(72) Inventeur : **Bonafous, Maurice
50, route d'Espagne Gurmecon
F-64400 Oloron (FR)**

(74) Mandataire : **Marquer, Francis et al
CABINET MOUTARD 35, avenue Victor Hugo Résidence Champfleury
F-78180 Voisins-le-Bretonneux (FR)**

## Description

La présente invention concerne un actionneur hydraulique ou pneumatique à simple effet assurant, au moyen d'un accumulateur d'énergie pneumatique, son retour en position initiale et son maintien dans cette position lorsque la pression du fluide hydraulique moteur s'abaisse en dessous d'une pression prédéterminée. Cette position initiale est généralement une position de sécurité pour le dispositif commandé.

Elle s'applique notamment, mais non exclusivement, à l'entraînement en rotation de l'arbre de manœuvre d'un dispositif tel qu'une vanne ou un robinet.

On sait que, pour ce type d'application, de nombreux modes de réalisation ont été déjà proposés.

Ainsi, par exemple, par le document FR-A-1 460 561, on connaît un actionneur faisant intervenir un vérin hydraulique ou pneumatique dont la tige est reliée à l'arbre d'entraînement du robinet par l'intermédiaire d'un système de transmission permettant de convertir de façon irréversible le mouvement rectiligne de la tige du vérin en un mouvement de rotation quart de tour de l'arbre d'entraînement de l'obturateur du robinet. Selon ce mode de réalisation, le vérin est à double effet et commande, dans un sens, l'ouverture et, dans l'autre sens, la fermeture du robinet. Toutefois, un inconvénient de ce type d'actionneurs consiste en ce qu'il nécessite, à la fois pour l'ouverture et pour la fermeture, l'admission dans le vérin d'un fluide moteur sous pression, de sorte qu'en cas d'absence de fluide moteur sous pression, par exemple à la suite d'une panne du générateur de fluide sous pression ou d'une rupture des conduits d'alimentation du vérin, l'actionneur demeure dans la position qu'il occupait au moment de la panne. Ainsi, si le robinet se trouve ouvert, il demeurera ouvert sans possibilité immédiate de se refermer (ou inversement).

En vue de supprimer ces inconvénients on a également proposé des actionneurs de ce genre faisant intervenir un vérin à simple effet pour la manœuvre de l'obturateur du robinet et un dispositif à accumulation d'énergie pour le rappel et le maintien de l'obturateur du robinet en position de sécurité lorsque la pression du fluide moteur s'abaisse au-dessous d'une certaine valeur. Les dispositifs à accumulation d'énergie utilisés dans ces actionneurs comprennent souvent des ressorts, par exemple de simples ressorts hélicoïdaux, qui sont comprimés par la tige du vérin lorsque ce dernier est soumis à la pression du fluide moteur, et absorbent, sous forme d'énergie potentielle, une partie de l'énergie du vérin et qui restituent cette énergie en repoussant la tige du vérin en position initiale lorsque ce dernier n'est plus moteur. Le document FR-A-2 304 957 décrit en particulier un système à accumulation d'énergie permettant d'obtenir, lors du retour en position initiale de l'actionneur, en l'absence de pression de commande, une force de rappel dont la valeur varie en fonction du déplacement de la tige du vérin selon une loi appropriée aux buts recherchés.

Toutefois, ces actionneurs à accumulation d'énergie, de structure mécanique, présentent un certain nombre d'inconvénients :

ils sont généralement lourds et relativement encombrants et parfois complexes sur le plan mécanique, ce qui nuit à leur fiabilité,

ils nécessitent l'emploi de vérins relativement puissants par rapport à l'effort nécessaire pour assurer la manœuvre seule du robinet (ouverture ou fermeture) ; en effet, au cours de la manœuvre du robinet, le vérin doit produire un double effort (effort nécessaire pour effectuer l'ouverture du robinet + effort appliqué au dispositif d'accumulation en vue d'emmagasiner l'énergie nécessaire au retour en position de sécurité du robinet),

ils sont sujets à des phénomènes d'usure, de corrosion et/ou de fatigue des ressorts, de sorte qu'à la longue, la fonction de sécurité peut se révéler défaillante.

L'invention a donc pour but de supprimer tous ces inconvénients. Elle propose à cet effet un actionneur dans lequel l'accumulateur d'énergie est de type pneumatique et dans lequel la charge de l'accumulateur en énergie potentielle est assurée par le fluide moteur sous pression qui alimente le vérin.

Cet actionneur se compose plus particulièrement, d'une façon connue notamment par le brevet CH-A-480 544, d'un vérin, de préférence à simple effet, dont la tige est reliée à l'arbre d'entraînement du dispositif commandé par l'intermédiaire d'un système de transmission permettant de convertir le mouvement rectiligne de la tige du vérin en un mouvement de rotation dudit arbre d'entraînement, l'extrémité de la tige du vérin pénétrant, avec étanchéité, à l'intérieur d'une chambre d'accumulation connectée au circuit d'admission du fluide moteur du vérin par l'intermédiaire d'un circuit de distribution comprenant au moins un clapet taré anti-retour et un distributeur d'équilibrage, par exemple à poussoir et rappel par ressort qui autorise l'admission du fluide moteur du vérin dans la chambre d'accumulation lorsque la tige du piston se trouve en position fin de course déployée sous l'effet de la pression du fluide moteur dans la chambre de travail du vérin jusqu'à l'obtention de l'équilibrage des pressions entre la chambre de travail du vérin et la chambre d'accumulation.

Selon l'invention, cet actionneur est plus particulièrement caractérisé en ce que le circuit de distribution de l'actionneur selon l'invention comprend en outre un circuit d'équilibrage reliant dans les deux sens la chambre d'accumulation au circuit d'admission du fluide moteur, ce circuit comprenant un distributeur secondaire piloté par la pression régnant dans la chambre d'accumulation et un étranglement (fuite calibrée) servant à freiner le passage du fluide.

Le fonctionnement de cet actionneur peut alors s'établir comme suit.

En l'absence de pression du fluide moteur, le vérin, au repos, se trouve à l'état rétracté. L'admission du fluide moteur dans le vérin provoque ensuite un déploiement de la tige et l'entraînement en rotation de l'arbre de manœuvre. En fin de course de la tige, le distributeur s'ouvre et met en pression la chambre d'accumulation. Lorsque la différence de pression entre le fluide moteur dans la chambre du vérin et dans la chambre d'accumulation s'abaisse au-dessous d'un seuil prédéterminé, le clapet taré anti-retour se referme. L'actionneur se trouve alors en position armée.

Si, par suite d'une action volontaire ou fortuite, la pression du fluide moteur à l'intérieur du vérin est supprimée ou s'abaisse au-dessous d'une valeur prédéterminée, sous l'effet de la pression du fluide contenu à l'intérieur de la chambre d'accumulation, sur l'extrémité de la tige du piston (ou son prolongement), le vérin retournera en position rétractée, ramenant ainsi l'arbre d'entraînement du dispositif commandé à sa position initiale.

Ainsi, lorsque la pression du fluide à l'intérieur de la chambre d'accumulation s'élève au-dessus d'un seuil prédéterminé, par exemple par suite d'un échauffement, le distributeur secondaire s'ouvre et laisse le passage à un courant de fluide freiné par l'étranglement jusqu'à ce que le niveau de pression à l'intérieur de la chambre d'alimentation redevienne admissible.

Avantageusement, le circuit d'équilibrage est conçu de manière à éliminer les surpressions accidentelles dans la chambre d'accumulation quelle que soit la position axiale de la tige.

Selon une autre caractéristique de l'invention, le susdit circuit de distribution est monté à l'intérieur de la tige du vérin de l'actionneur. Dans ce cas, le distributeur d'équilibrage comprend un poussoir dépassant axialement à l'extrémité de la tige du vérin de telle sorte qu'en fin de course de déploiement du vérin, il vienne en butée sur une pièce fixe solidaire de la paroi de la chambre d'accumulation ou sur la paroi elle-même.

A cet effet, la tige du piston et le piston lui-même se trouvent traversés par un alésage coaxial, de préférence cylindrique, permettant la mise en communication de la chambre de travail du vérin à la chambre d'accumulation. A l'intérieur de ce canal se trouve monté un système de distribution comprenant un corps tubulaire cylindrique comportant, du côté de l'extrémité de la tige du piston et à une distance déterminée de celle-ci, au moins un orifice latéral donnant sur une gorge axiale ménagée sur la paroi extérieure dudit corps. Cette gorge axiale constitue, avec la surface cylindrique interne de la tige, un canal axial débouchant dans la chambre d'accumulation.

A l'intérieur du corps tubulaire est monté coulissant un tiroir cylindrique, retenu axialement dans un sens grâce à un collet venant en butée sur le corps tubulaire. Ce tiroir s'étend, du côté de la chambre d'accumulation au-delà de l'extrémité de la tige du piston pour former un poussoir et est sollicité de l'autre côté (côté vérin) par un ressort de compression qui tend à repousser le tiroir vers la chambre d'accumulation jusqu'à ce que le collet vienne en butée sur ledit corps.

Par ailleurs, ce tiroir comprend au moins deux chambres successives, à savoir, une chambre d'admission débouchant à l'extrémité du tiroir et une chambre d'échappement. Ces deux chambres comprennent respectivement au moins deux orifices latéraux reliés entre eux par une gorge axiale pratiquée dans la surface externe du tiroir.

La chambre d'échappement comprend en outre un orifice d'échappement obturé par le corps lorsque le collet du tiroir se trouve en butée sur le corps et qui est destiné à venir en communication avec l'orifice latéral du corps, lors d'un déplacement axial du tiroir, à l'encontre de l'action du ressort, par exemple à la suite d'une pression mécanique ou hydraulique exercée sur la partie formant poussoir.

La chambre d'admission comprend, entre son orifice latéral et son orifice d'extrémité, un clapet taré comprenant un siège sur lequel vient porter une bille sollicitée par un ressort en direction opposée au sens d'admission du fluide.

Pour permettre la décompression de la chambre d'accumulation en cas de surpression, le tiroir comprend, entre la chambre d'admission et la chambre d'échappement, une chambre intermédiaire reliée à la chambre d'échappement par l'intermédiaire d'une fuite calibrée pouvant consister en une pièce en élément fritté constituant une paroi entre les deux chambres.

La chambre intermédiaire communique par ailleurs avec la chambre d'admission par l'intermédiaire d'au moins deux orifices latéraux respectifs reliés par une gorge axiale.

Un mode de réalisation de l'invention sera décrit ci-après, à titre d'exemple non limitatif, avec référence aux dessins annexés dans lesquels :

Les figures 1 et 2 représentent, en coupe longitudinale, un actionneur pour obturateur quart de tour, en position repos (figure 1) et en position armée (figure 2) de l'obturateur ;

Les figures 3a, 4a et 5a sont des coupes axiales à plus grande échelle de la partie tige du vérin ou son prolongement incorporant le système de distribution, en position initiale (figure 3a), en position fin d'armement (figure 4a) et en fonction surpression dans la chambre d'accumulation (figure 5a) ;

Les figures 3b, 4b et 5b représentent respectivement les schémas hydrauliques correspondant aux positions du système de distribution représenté figures 3a, 4a et 5a.

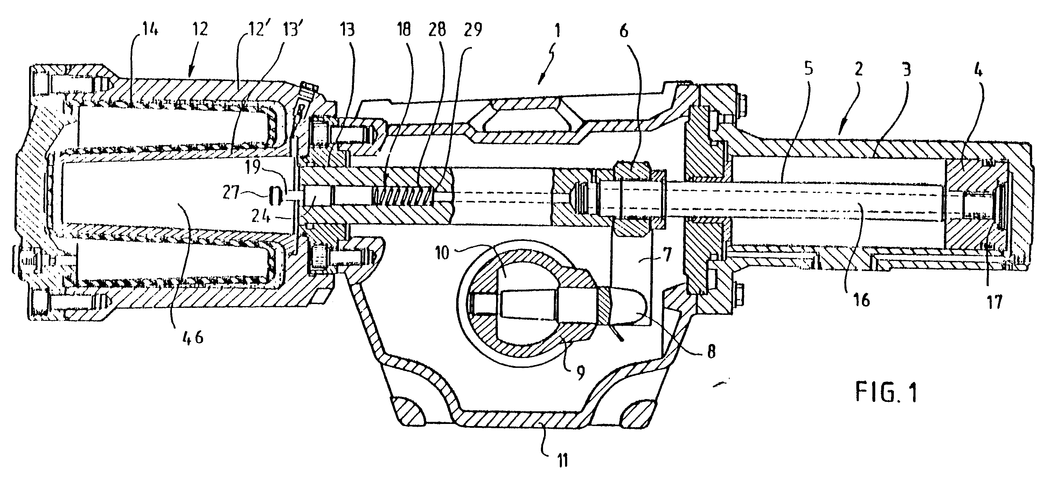

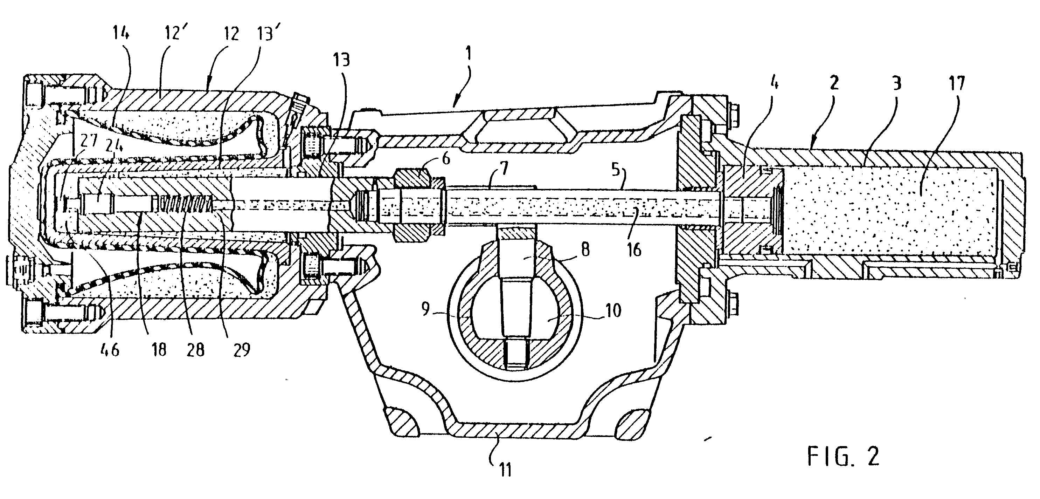

Avec référence aux figures 1 et 2, l'actionneur 1 comprend un vérin hydraulique à simple effet 2 comportant de façon classique un cylindre 3 et un piston 4 solidaire d'un ensemble formant tige (désignée ci-après tige 5) mobile rectilignement. Cette tige 5 comprend, dans sa partie centrale, une noix 6 sur laquelle vient s'articuler au moins une bielle 7 elle-même articulée sur un bras de levier 8 solidaire d'un mandrin 9 monté fixement sur l'arbre d'actionnement 10 de l'obturateur du robinet. Il convient de préciser que la tige 5 du vérin 2 ainsi que les éléments du système de transmission et de conversion, à savoir, la bielle 7 et le bras de levier 8, sont situés dans des plans orthogonaux à l'axe d'entraînement 10 de l'obturateur du robinet.

Le système de transmission et de conversion précédemment décrit se trouve logé dans un carter ou corps 11 de l'actionneur, sur lequel est monté le vérin hydraulique 2.

Sur ce corps 11 se trouve également monté, du côté opposé au vérin 2 et coaxialement au vérin 2, un accumulateur d'énergie pneumatique 12 présentant un orifice coaxial 13 dans lequel vient s'engager et peut coulisser, de façon étanche, l'extrémité de la tige 5 du vérin 2.

A l'intérieur de cet accumulateur 12 le passage de l'extrémité de la tige 5 du vérin 2 se trouve protégé par une cloche de protection 13' fixée par sa base autour de l'orifice 13. Le volume « torique » compris entre l'enceinte extérieure 12' de l'accumulateur 12 et la cloche de protection 13' renferme une membrane élastique 14 de forme correspondante dans laquelle peut être injecté un gaz sous pression tel que de l'azote.

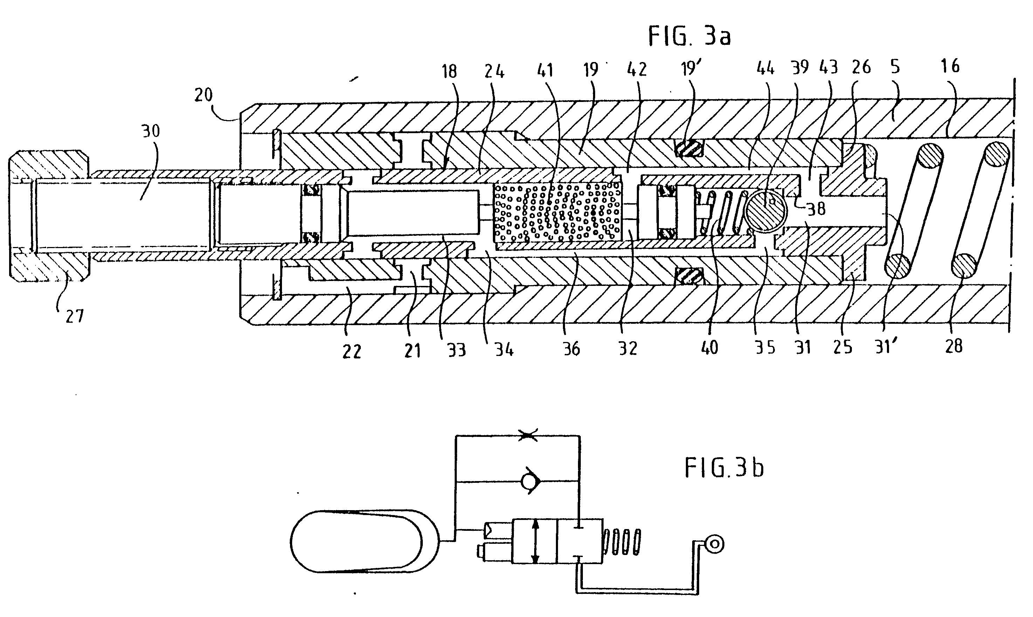

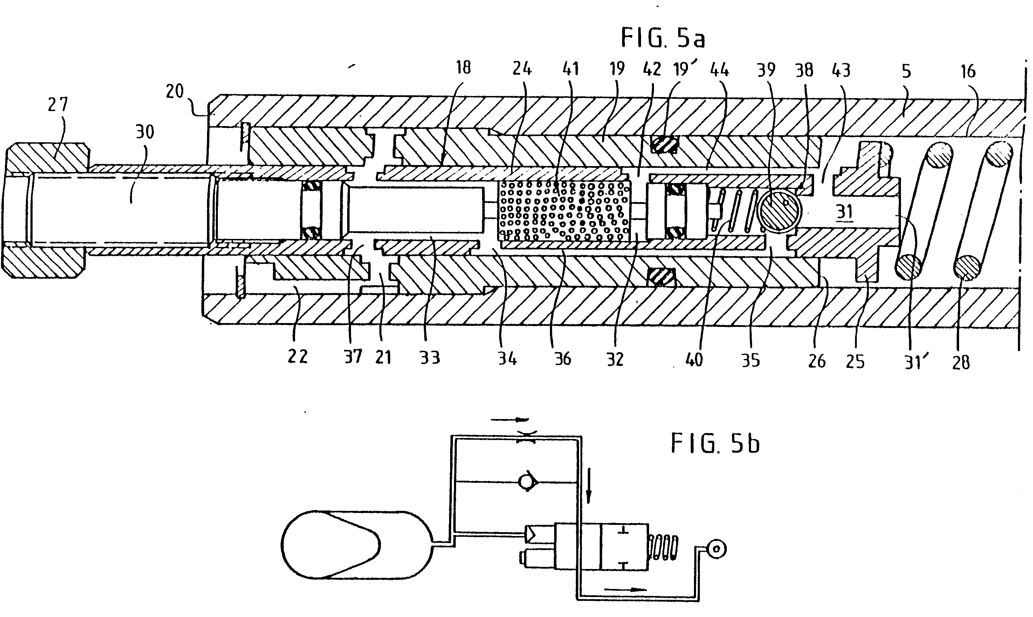

Comme précédemment mentionné, la tige 5 du vérin et le piston se trouvent traversés par un alésage coaxial 16 permettant la mise en communication de la chambre de travail 17 du vérin 2 avec la chambre d'accumulation 46. Dans cet alésage est disposé, du côté de l'extrémité de la tige, un système de distribution 18 tel que celui représenté sur les figures 3a, 4a et 5a.

Ce système de distribution se compose d'un corps tubulaire cylindrique 19 monté fixement, avec étanchéité (joint 19') dans l'alésage 16. Ce corps tubulaire 19 comporte, du côté de l'extrémité 20 de la tige 5 du vérin 2, au moins un orifice latéral 21 donnant sur une gorge axiale 22 ménagée sur la paroi extérieure dudit corps 19. Cette gorge axiale 22 constitue avec l'alésage 16 de la tige 5 un canal axial débouchant dans la chambre d'accumulation 46.

A l'intérieur du corps tubulaire 19 est monté coulissant un tiroir cylindrique 24 retenu axialement dans un sens grâce à un collet 25 venant en butée sur l'extrémité (tranche 26) du corps tubulaire 19 située du côté du vérin 2.

Ce tiroir 24 s'étend, du côté de la chambre d'accumulation 46, au-delà de l'extrémité 20 de la tige 5 du vérin 2, pour former un poussoir 27 et se trouve sollicité, de l'autre côté, au niveau du collet 25, par un ressort de compression 28 retenu par un décrochement de l'alésage 29 (figures 1 et 2).

Le ressort 28 agit de manière à repousser le tiroir 24 vers la chambre d'accumulation 46 jusqu'à ce que le collet 25 vienne en butée sur ledit corps 19.

D'une façon plus précise, le tiroir 24 présente une structure tubulaire, à l'intérieur de laquelle est disposée une tige 30 en une ou plusieurs pièces, convenablement usinée pour former les différentes chambres du système de distribution.

Dans l'exemple représenté, ces chambres sont au nombre de trois, à savoir :

une chambre d'admission 31 débouchant à l'extrémité du tiroir 24, du côté du vérin 2,

une chambre intermédiaire 32, et

une chambre d'échappement 33.

Les chambres d'admission 31 et d'échappement 33 comprennent respectivement au moins deux orifices latéraux 34, 35, reliés entre eux par une gorge axiale 36 pratiquée dans la surface extérieure du tiroir 24.

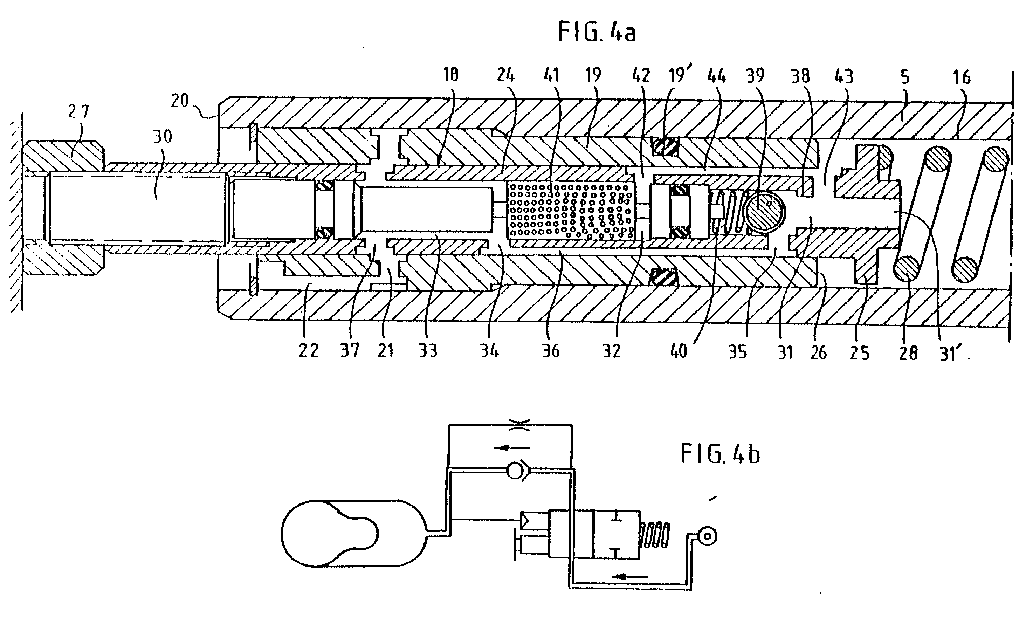

La chambre d'échappement comprend en outre un orifice d'échappement 37 obturé par le corps 19 lorsque le collet 25 se trouve en butée sur l'extrémité 26 dudit corps 19, comme représenté sur la figure 3a. Cet orifice d'échappement 37 vient par contre en communication avec l'orifice latéral 21 du corps 19, à la suite d'un déplacement axial du tiroir 24, à l'encontre de l'action du ressort 28 comme représenté sur la figure 4a.

La chambre d'admission 31 comprend, entre son orifice latéral 35 et son orifice d'extrémité 31', un clapet taré comprenant un siège 38 sur lequel vient porter une bille 39 sollicitée par un ressort 40 en direction opposée au sens d'admission du fluide.

La partie 41 de la tige 30 séparant la chambre d'échappement 33 et la chambre intermédiaire 32 est réalisée à l'aide d'un élément fritté autorisant une fuite calibrée du fluide hydraulique.

Par ailleurs, la chambre intermédiaire 32 se trouve reliée à la chambre d'admission 31 par l'intermédiaire de deux orifices latéraux respectifs 42, 43 reliés par une gorge axiale 44, l'orifice 43 de la chambre d'admission 31 étant situé en amont du clapet taré (bille 39-siège 38).

Les figures 3 à 5 permettent d'illustrer le fonctionnement du système de distribution précédemment décrit.

Dans l'exemple représenté figure 3a, le système de distribution 18 se trouve dans la position qu'il occuperait dans l'actionneur représenté figure 1, selon laquelle le vérin 2 se trouve à l'état rétracté, la pression du fluide moteur étant nulle et le robinet se trouvant en position de sécurité repos. Le poussoir 27 du système de distribution 18 qui dépasse de l'extrémité 20 de la tige 5 du vérin 2 ne se trouve pas sollicité. Dans ce cas, le ressort de pression 28 maintient le tiroir 24 en fin de course avant (collet 25 en butée) et l'orifice 37 de la chambre d'échappement 33 se trouve obturé, de sorte que la pression du fluide hydraulique restant dans la chambre d'accumulation 46 ne peut s'échapper vers la chambre 17 de travail du vérin qui se trouve être à pression nulle. Le schéma hydraulique correspondant à la configuration du système de distribution se trouve représenté sur la figure 3b.

Si, à partir de la position de l'actionneur représenté figure 1, on admet, à l'intérieur de la chambre de travail 17 du vérin 2, du fluide moteur sous pression, le vérin 2 va se déployer sans qu'il ne survienne aucune modification notable de la position du système de distribution 18 (sauf en cas de surpression dans la chambre d'accumulation). En fin de course du vérin, le poussoir 27 du système de distribution 18 vient en butée contre le fond de la cloche de protection 13 (position représentée figure 2), ce qui provoque un déplacement axial du tiroir 24 contre l'action du ressort 28 (position représentée figure 4a). L'orifice latéral 21 du corps 19 du système de distribution 18 se trouve alors situé au droit de l'orifice 37 de la chambre d'échappement 33. Du fait de la différence de pression entre la chambre d'accumulation 46 et la chambre de travail 17 du vérin 2, le fluide repousse la bille 39 du clapet taré, contre l'action du ressort 40 et pénètre dans la chambre d'accumulation 46 en comprimant l'azote contenu par la membrane élastique 14 (schéma hydraulique du système de distribution représenté figure 4b).

Lorsque l'écart de pression entre la chambre de travail 17 du vérin 2 et la chambre d'accumulation 46 s'abaisse en dessous d'un seuil prédéterminé, la bille 39 se trouve à nouveau repoussée sur son siège 38. Toutefois, cet écart de pression s'annule progressivement grâce au passage calibré de la partie 41 de la tige 30. L'actionneur se trouve alors en position armée. Grâce au fluide maintenu sous pression dans la chambre d'accumulation 46 par l'azote comprimée dans la membrane élastique 14, il possède une réserve d'énergie potentielle capable d'assurer le retour en position initiale de l'ensemble actionneur/robinet.

Ce retour à la position initiale de l'actionneur s'obtient en relâchant la pression du fluide moteur dans la chambre de travail 17 du vérin 2. Dans ce cas, le retour en position initiale de l'ensemble s'effectue sous l'effet de la poussée du fluide sous pression contenu dans la chambre d'accumulation 46 sur l'extrémité 20 de la tige 5 du vérin 2.

Dans le cas où, à un moment quelconque, il se produit une surpression dans la chambre d'accumulation 46, le fluide sous pression exerce sur le poussoir 27 du système de distribution 18 un effort qui provoque un déplacement du tiroir 24, contre l'action du ressort 28. Sous l'effet de ce déplacement, l'orifice 37 de la chambre d'échappement 33 vient se disposer au droit de l'orifice latéral 21 du corps 19. La chambre d'échappement se trouve donc en communication avec la chambre d'accumulation 46, tandis que le clapet taré (bille 39-siège 38) demeure fermé. Un courant de fluide freiné peut cependant s'écouler au travers de l'élément 41 en matériau fritté, dans la chambre intermédiaire 32, puis par les orifices 42, 43 et la gorge 44 dans la chambre d'admission 31, en amont du clapet taré. Cet écoulement se poursuit jusqu'à ce que la pression à l'intérieur de la chambre d'accumulation 46 retourne à un niveau acceptable prédéterminé selon lequel l'effort exercé par le ressort 28 devient plus important que l'effort appliqué sur le poussoir 27 par le fluide contenu dans la chambre d'accumulation 46. Dans ce cas, sous l'effet du ressort 28, le tiroir 24 revient à sa position initiale, collet 25 en butée, et l'orifice 37 de la chambre d'échappement 33 se trouve à nouveau obturé (figure 3a). Ce fonctionnement peut intervenir sur toute la course de la tige du vérin.

Dans l'exemple précédemment décrit, l'actionneur fonctionne à l'aide d'un vérin simple effet. Toutefois, il serait possible, pour des raisons de sécurité, d'utiliser un vérin à double effet. Dans ce cas, le retour de l'actionneur à sa position d'origine pourrait être assuré par le vérin et/ou le dispositif à accumulation d'énergie.

## Revendications

1. Actionneur du type comprenant un vérin (2), de préférence à simple effet dont la tige (5) est reliée à l'arbre d'entraînement (10) du dispositif commandé par l'intermédiaire d'un système de transmission (6, 7, 8, 9) permettant de convertir le mouvement rectiligne de la tige (5) du vérin en un mouvement de rotation dudit arbre d'entraînement (10), l'extrémité de la tige (5) du vérin (2) pénétrant, avec étanchéité, à l'intérieur d'une chambre d'accumulation (46) connectée au circuit d'admission du fluide moteur du vérin (2) par l'intermédiaire d'un circuit de distribution (18) comprenant au moins un clapet taré anti-retour (38, 39, 40) et un distributeur d'équilibrage par exemple à poussoir (27) et rappel par ressort (28) qui autorise l'admission du fluide moteur du vérin (2) dans la chambre d'accumulation (46) lorsque la tige (5) du vérin (2) se trouve en position fin de course déployée sous l'effet de la pression du fluide moteur dans la chambre de travail (17) du vérin (2) jusqu'à l'obtention de l'équilibrage des pressions entre la chambre de travail (17) du vérin (2) et la chambre d'accumulation (46), caractérisé en ce que le circuit de distribution (18) de l'actionneur comprend en outre un circuit d'équilibrage (31, 43, 44, 42, 41, 33, 37, 21, 22) reliant dans les deux sens la chambre d'accumulation (46) au circuit d'admission du fluide moteur, ce circuit comprenant un distributeur secondaire piloté par la pression régnant à l'intérieur de la chambre d'accumulation (46) et un étranglement (fuite calibrée 41) servant à freiner le passage du fluide.

2. Actionneur selon la revendication 1, caractérisé en ce que le circuit d'équilibrage est conçu de manière à éliminer les surpressions accidentelles dans la chambre d'accumulation (46) quelle que soit la position axiale de la tige (5).

3. Actionneur selon l'une des revendications précédentes, caractérisé en ce que le susdit circuit de distribution (18) est monté à l'intérieur de la tige (5) du vérin (2) de l'actionneur.

4. Actionneur selon la revendication 3, caractérisé en ce que le distributeur d'équilibrage comprend un poussoir (27) dépassant axialement à l'extrémité de la tige (5) du vérin, de telle sorte qu'en fin de course de déploiement du vérin, il vienne en butée sur une pièce fixe solidaire de la paroi de la chambre d'accumulation (46) ou sur la paroi elle-même.

5. Actionneur selon l'une des revendications 3 et 4, caractérisé en ce que le piston (4) et sa tige (5) se trouvent traversés par un alésage coaxial (16), à l'intérieur duquel est monté un système de distribution comprenant :

un corps tubulaire (19) comportant, du côté de l'extrémité de la tige (5) du vérin (2), au moins un orifice latéral (21) donnant sur un canal (22) débouchant dans la chambre d'accumulation (46), et

monté coulissant à l'intérieur dudit corps (19) et retenu axialement dans un sens par une butée (25, 26), un tiroir (24) s'étendant du côté de la chambre d'accumulation (46), au-delà de la tige (5) du vérin (2) pour former un poussoir (27) et, sollicité de l'autre côté par un ressort de compression (28) qui tend à repousser le tiroir (24) vers ladite butée (25, 26) ledit tiroir (24) comportant au moins deux chambres successives, à savoir : une chambre d'admission (31) débouchant à l'extrémité du tiroir et une chambre d'échappement (33), ces deux chambres communiquant entre elles au moyen d'un canal (36), en ce que la chambre d'échappement (33) comprend un orifice d'échappement (37) obturé par ledit corps (19) lorsque le tiroir (24) se trouve contre ladite butée (26) et qui est destiné à venir en communication avec l'orifice latéral (21) du corps (19) lors d'un déplacement axial du tiroir (24) à l'encontre de l'action du ressort (28), et en ce que la chambre d'admission (31) comprend en outre le clapet taré pouvant comprendre un siège (38) sur lequel vient porter une bille (39) sollicitée par un ressort (40) en direction opposée au sens d'admission du fluide.

6. Actionneur selon la revendication 5, caractérisé en ce que le tiroir (24) comprend en outre, entre la chambre d'admission (31) et la chambre d'échappement (33), une chambre intermédiaire (32) reliée à la chambre d'échappement (33) par l'intermédiaire d'une fuite calibrée pouvant consister en une pièce en élément fritté (41) constituant une paroi entre ces deux chambres (32, 33), et en ce que la chambre intermédiaire (32) communique par ailleurs avec la chambre d'admission (31) par l'intermédiaire d'un canal (44) débouchant dans la chambre d'admission en amont du clapet taré (38, 39, 40).

7. Actionneur selon l'une des revendications précédentes, caractérisé en ce que le vérin (2) de l'actionneur est un vérin hydraulique, et en ce que, dans ce cas, à l'intérieur de la chambre d'accumulation (46) est disposée une membrane élastique (14) dans laquelle est injecté un gaz sous pression, par exemple de l'azote.

8. Actionneur selon la revendication 7, caractérisé en ce que le passage de l'extrémité de la tige (5) du vérin (2) à l'intérieur de la chambre d'accumulation (46) se trouve protégé par une cloche de protection (13') fixée à l'accumulateur (12).

9. Actionneur selon l'une des revendications précédentes, caractérisé en ce que le vérin (2) de l'actionneur est un vérin à double effet.

10. Actionneur selon l'une des revendications précédentes, caractérisé en ce que l'arbre d'entraînement (10) du dispositif commandé consiste en l'arbre de manœuvre de l'obturateur d'un robinet.

**Claims**

1. An actuator of the type comprising a cylinder (2) preferably single acting, whose rod (5) is connected to the shaft (10) driving the device controlled through a transmission system (6, 7, 8, 9) for converting the rectilinear movement of the rod (5) of the cylinder into a rotational movement of said drive shaft (10), wherein the end of the rod (5) of the cylinder (2) penetrates sealingly inside an accumulation chamber (46) connected to the drive fluid admission circuit of the cylinder (2) through a distribution circuit (18) comprising at least one non return calibrated valve (38, 39, 40) and a balancing distributor, for example with push rod (27) and spring loaded return (28) which allows the drive fluid for the cylinder (2) to be admitted into the accumulation chamber (46) when the rod (5) of said cylinder (2) is in an extended end of travel position under the effect of the pressure of the drive fluid in the work chamber (17) of the cylinder (2) until there is balancing of the pressure between the work chamber (17) of the cylinder (2) and the accumulation chamber (46), characterized in that said distribution circuit (18) of the actuator further comprises a balancing circuit (31, 43, 44, 42, 41, 33, 37, 21, 22) connecting the accumulation chamber (46) to the drive fluid admission circuit in both directions, this circuit comprising a secondary distributor driven by the pressure reigning inside the accumulation chamber (46) and a constriction (calibrated leak 41), for braking the passage of the fluid.

2. The actuator as claimed in claim 1, wherein said balancing circuit serves for eliminating the accidental over pressures in said accumulation chamber (46) whatever the axial position of said rod (5).

3. The actuator as claimed in one of the preceding claims, characterized in that said distribution circuit (18) is mounted inside the rod (5) of the cylinder (2) of the actuator.

4. The actuator as claimed in claim 3, characterized in that said balancing distributor comprises a push rod (27) extending axially beyond the end of the rod (5) of said cylinder, so that at the extended end of travel of the cylinder, it comes into abutment against a fixed piece integral with the wall of said accumulation chamber (46) or against said wall itself.

5. The actuator as claimed in one of claims 3 and 4, characterized in that the piston (4) and its rod (5) have therethrough a coaxial bore (16) inside which is mounted a distribution system comprising :

a tubular body (19) comprising, on the same side as the end of the rod (5) of the cylinder (2), at least one lateral orifice (21) giving onto a channel (22) opening into said accumulation chamber (46), and

mounted for sliding inside said body (19) and retained axially in one direction by a stop (25, 26), a slide valve (24) extending on the accumulation chamber (46) side beyond the rod (5) of the cylinder (2) so as to form a push rod (27) and, urged on the other side by a compression spring (28) which tends to push said slide valve (24) back towards said stop (25, 26), said slide valve (24) comprising at least two successive chambers, namely : an admission chamber (31) opening at the end of the slide valve and a discharge chamber (33), these two chambers communicating together by means of a channel (36), in that said discharge chamber (33) comprises a discharge orifice (37) closed off by said body (19) when said slide valve (24) is against said stop (26) and which is intended to come into communication with the lateral orifice (21) of said body (19) during an axial movement of said slide valve (24) against the action of said spring (28) and in that said intake chamber (31) further comprises the calibrated valve possibly comprising a seat (38) onto which comes to bear a ball (39) urged by a spring (40) in the direction opposite the fluid intake direction.

6. The actuator as claimed in claim 5, characterized in that said slide valve (24) further comprises, between said intake chamber (31) and said discharge chamber (33), an intermediate chamber (32) connected to said discharge chamber (33) through a calibrated leak which may consist of a sintered element piece (41) forming a wall between said two chambers (32, 33) and in that said intermediate chamber (32) further communicates with said intake chamber (31) by means of a channel (44) ending in the intake chamber upstream of said calibrated valve (38, 39, 40).

7. The actuator as claimed in one of the preceding claims, characterized in that the cylinder (2) of the actuator is a hydraulic cylinder and in that, in this case, there is disposed inside said accumulation chamber (46) a resilient membrane (14) into which a pressurized gas, for example nitrogen, is injected.

8. The actuator as claimed in claim 7, characterized in that the passage of the end of the rod (5) of the cylinder (2) inside said accumulation chamber (46) is protected by a protection bell (13') fixed to said accumulator (12).

9. The actuator as claimed in one of the preceding claims, characterized in that the cylinder (2) of said actuator is a double acting cylinder.

10. The actuator as claimed in one of the preceding claims, characterized in that said shaft (10) for driving the controlled device consists of the shaft for operating the valving member of a cock.

Patentansprüche

1. Antrieb mit einem Zylinder (2) mit vorzugsweise einfacher Wirkung, dessen Stange (5) mit der Antriebswelle (10) der gesteuerten Anordnung durch ein Übertragungssystem (6, 7, 8, 9) verbunden ist, welches die gradlinige Bewegung der Stange (5) des Zylinders in eine Drehbewegung der besagten Antriebswelle (10) umwandelt, wobei das Ende der Stange (5) des Zylinders (2) abgedichtet in eine Speicherkammer (46) eindringt, welche an das Einlassystem für das Treibmittel des Zylinders (2) durch ein Verteilersystem (18) angeschlossen ist, das mindestens ein geeichtes Einwegventil (38, 39, 40) besitzt, sowie einen Ausgleichsverteiler mit, zum Beispiel, einer Druckvorrichtung (27) und Federrückstellung (28) welcher den Eintritt des Treibmittels für den Zylinder (2) in die Speicherkammer (46) erlaubt, wenn die Stange (5) des Zylinders (2) in die Endstellung ausgefahren ist, unter der Druckwirkung des Treibmittels in der Betriebskammer (17) des Zylinders (2), bis ein Druckausgleich zwischen der Betriebskammer (17) des Zylinders (2) und der Speicherkammer (46) erreicht ist, dadurch gekennzeichnet, dass zum Verteilersystem (18) des Antriebs ausserdem ein Ausgleichssystem (31, 43, 44, 42, 41, 33, 37, 21, 22) gehört welches in beiden Richtungen die Speicherkammer (46) mit dem Einlassystem für das Treibmittel verbindet, wobei dieses System einen untergeordneten Verteiler besitzt, der von dem im Inneren der Speicherkammer (46) herrschenden Druck gesteuert wird, und eine Drosselung (geeichte Leckage 41), die dazu dient, den Durchfluss des Fluids zu bremsen.

2. Antrieb nach Anspruch 1, dadurch gekennzeichnet, dass das Ausgleichssystem so angelegt ist, dass ein unbeabsichtigter Überdruck in der Speicherkammer (46) ausgeschlossen ist, unabhängig von der axialen Stellung der Stange (5).

3. Antrieb nach einem der vorhergehenden Ansprüche, dadurch gekennzeichnet, dass das besagte Verteilersystem (18) im Inneren der Stange (5) des Zylinders (2) des Antriebs angeordnet ist.

4. Antrieb nach Anspruch 3, dadurch gekennzeichnet, dass der Ausgleichsverteiler eine Druckvorrichtung (27) besitzt, die axial aus dem Ende der Stange (5) so herausragt, dass, wenn der Zylinder völlig ausgefahren ist, sie gegen ein unbewegliches, mit der Wand der Speicherkammer (46) fest verbundenes, Teil in Anschlag kommt oder aber gegen die Wand selbst.

5. Antrieb nach einem der Ansprüche 3 und 4, dadurch gekennzeichnet, dass durch den Kolben (4) und seine Stange (5) eine koaxiale Bohrung (16) hindurchreicht, in derem Inneren das Verteilersystem eingebaut ist, mit :

einem röhrenförmigen Körper (19), der, auf der Seite des Stangen (5) endes des Zylinders (2) mindestens eine seitliche Öffnung (21) besitzt, welche auf einen Kanal (22) hin gerichtet ist, der in die Speicherkammer (46) mündet und

einem im Inneren des besagten Körpers (19) verschiebbar angeordneten und axial in einer Richtung durch einen Anschlag (25, 26) angehaltenen Schieber (24), der, auf seiten der Speicherkammer (46), über die Stange (5) des Zylinders (2) hinausragt, um eine Druckvorrichtung (27) zu bilden, und auf der anderen Seite unter der Wirkung einer Druckfeder (28) steht, welche den Schieber (24) gegen besagten Anschlag (25, 26) zurückzuschieben sucht, wobei besagter Schieber (24) mindestens zwei aufeinanderfolgende Kammern besitzt, nämlich : eine Einlasskammer (31), die am Ende des Schiebers mündet, und eine Austrittskammer (33), wobei diese beiden Kammern miteinander durch einen Kanal (36) in Verbindung stehen, dass die Austrittskammer (33) mit einer Austrittsöffnung (37) versehen ist, welche von besagtem Körper (19) verschlossen wird, wenn der Schieber (24) gegen besagten Anschlag (26) anliegt, und mit der seitlichen Öffnung (21) des Körpers (19) in Verbindung tritt, wenn der Schieber (24) gegen die Wirkung der Feder (28) axial verschoben wird, und dass die Einlasskammer (31) ausserdem mit dem geeichten Ventil versehen ist, welches einen Sitz (38) enthalten kann, auf dem eine Kugel (39) zur Auflage kommt, auf die eine Feder (40) im entgegengesetzten Sinne zur Einlassrichtung des Fluids wirkt.

6. Antrieb nach Anspruch 5, dadurch gekennzeichnet, dass der Schieber (24) ausserdem, zwischen der Einlasskammer (31) und der Austrittskammer (33), mit einer Zwischenkammer (32) versehen ist, die mit der Austrittskammer (33) durch eine geeichte Leckage verbunden ist, die aus einem Teil aus gesintertem Material (41) bestehen kann, welches eine Wand zwischen diesen beiden Kammern (32, 33) bildet, und dass die Zwischenkammer (32) ausserdem mit der Eintrittskammer (31) durch einen Kanal (44) verbunden ist, der oberhalb des geeichten Ventils (38, 39, 40) in die Einlasskammer mündet.

7. Antrieb nach einem der vorhergehenden Ansprüche, dadurch gekennzeichnet, dass der Zylinder (2) des Antriebs ein hydraulischer Zylinder ist und dass in diesem Falle im Inneren der Speicherkammer (46) eine elastische Membran (14) angeordnet ist, in die ein Gas unter Druck, zum Beispiel Stickstoff, eingeführt wird.

8. Antrieb nach Anspruch 7, dadurch gekennzeichnet, dass der Durchgang des Endes der Stange (5) des Zylinders (2) in der Speicherkammer (46) durch eine, am Speicher (12) befestigte, Schutzglocke (13') geschützt ist.

9. Antrieb nach einem der vorhergehenden Ansprüche, dadurch gekennzeichnet, dass der Zylinder (2) des Antriebs ein Zylinder mit doppelter Wirkung ist.

10. Antrieb nach einem der vorhergehenden Ansprüche, dadurch gekennzeichnet, dass die Antriebswelle (10) der gesteuerten Vorrichtung aus der Welle für die Betätigung eines Ventilverschlusses besteht.

FIG. 1

0 128 096

FIG. 2

FIG. 3a

FIG.3b

FIG. 4a

FIG. 4b

0 128 096

FIG. 5a

FIG. 5b

0 128 096